# FASCICULE DE BREVET EUROPEEN

(11) **EP 1 022 260 B1**
(45) Date de publication et mention de la délivrance du brevet: **09.03.2005**
(21) Numéro de dépôt: 00400114.5
(22) Date de dépôt: 18.01.2000
(51) Int. Cl.: C03C 25/40, D04H 1/46

(54) **Feutre aiguilleté, composition d'ensimage et procédé pour sa fabrication**
Nadelartiger Filz, Schlichtezusammensetzung, und Verfahren zur Herstellung
Needle-like fibrous felt, sizing composition and process for its production

(30) Priorité: 19.01.1999 FR 9900511
(43) Date de publication de la demande: 26.07.2000
(73) Titulaire: SAINT-GOBAIN ISOVER, 92400 Courbevoie (FR)
(72) Inventeur: Lankar, Frédéric, 59240 Dunkerque (FR); Labbe, Claire, 60140 Rantigny (FR); Espiard, Philippe, 60270 Gouvieux (FR)
(74) Mandataire: Cardin, Elise

(56) Documents cités:
- WO-A-92/00303
- GB-A- 2 068 989
- US-A- 3 630 825
- US-A- 3 739 836
- CHEMICAL ABSTRACTS, vol. 104, no. 20, 19 mai 1986 (1986-05-19) Columbus, Ohio, US; abstract no. 173134, page 287; XP002118530 & SU 1 203 048 A (RUBIN INDUSTRIAL ENTERPRISES) 7 janvier 1986 (1986-01-07)
- LOWRANCE RONALD E.; PAUL KLAUS-PETER: 'Environment-friendly alternatives for the formulation of VOC-compliant silicone coatings' PROC WATER BORNE HIGHER SOLIDS COAT SYMP. PROCEEDINGS OF THE WATER-BORNE AND HIGHER-SOLIDS COATINGS SYMPOSIUM 1990, NEW ORLEANS, pages 130 - 144

## Description

La présente invention se rapporte au domaine des produits d'isolation à base de laine minérale, notamment laine de verre ou de roche, plus particulièrement des feutres aiguilletés à base de laine minérale.

Les feutres aiguilletés sont particulièrement adaptés pour l'isolation thermique d'appareils ménagers, par exemple fours et appareils de cuisson, ainsi que des fours industriels.

La fabrication de ces produits comprend en général une étape de fibrage de filaments de laine minérale, et la réception des filaments sous la forme d'un matelas ou feutre dans lequel des filaments s'enchevêtrent, un ensimage étant appliqué, soit sur les filaments à la sortie du dispositif de fibrage, soit directement sur le matelas. La cohésion du feutre est ensuite assurée par aiguilletage.

L'ensimage a pour fonction de réduire le frottement entre les fibres pendant l'aiguilletage, de façon à empêcher autant que possible l'endommagement voire la rupture des filaments sous l'action des aiguilles. L'ensimage permet en outre avantageusement de fixer les poussières susceptibles de se dégager pendant le procédé, pour permettre de fabriquer et d'utiliser le feutre aiguilleté en l'absence de toute autre mesure de protection contre les poussières.

Des ensimages couramment utilisés sont donc du type lubrifiants à base d'huiles minérales, d'huiles naturelles ou de dérivés d'acides gras. Un inconvénient majeur lié à l'utilisation de ces substances, réside dans l'émission de composés organiques volatils par décomposition thermique lorsque des produits en renfermant sont portés à de hautes températures, telles que celles rencontrées en utilisation normale d'un appareil ménager tel qu'un four. Parmi ces composés se trouve le formaldéhyde dont le caractère malodorant est source de désagrément et même d'inquiétude chez l'utilisateur qui suspecte un dysfonctionnement de l'appareil.

En outre la mise en oeuvre de ces substances implique l'utilisation de quantités considérables d'un ou plusieurs émulsifiants pour obtenir une composition aqueuse apte à être pulvérisée sur la laine minérale avec les équipements usuels. A cette fin, on a eu coutume d'utiliser en particulier des émulsifiants du type alcoxylates d'alkyle et/ou nonylphénol, qui eux-mêmes ont tendance à se décomposer sous l'action de la chaleur en produisant du formaldéhyde.

Une tentative pour éviter ces désagréments consisterait à disperser l'huile minérale dans de l'eau sans émulsifiant à l'aide d'un dispositif de mélange sous haute pression, mais outre l'effort technique important impliqué par cette solution, on n'obtient pas de cette manière les résultats désirés.

Ainsi, d'autres tentatives ont consisté à substituer aux bases d'ensimages habituelles d'autres types de composés chimiques.

Par exemple, dans DE-A- 39 18 485, on propose d'utiliser un ensimage à base purement minérale, consistant en une solution aqueuse d'un polymère de phosphate hydrosoluble, dans laquelle la nécessité d'un émulsifiant est évidemment abolie. Le polymère de phosphate peut être par exemple un sel alcalin ou alcalino-terreux d'un polymère d'acide phosphorique où les unités phosphates sont condensées de façon linéaire et/ou ramifiée et/ou cyclique.

Néanmoins, la mise en oeuvre de ces ensimages à base minérale est très délicate, et de plus les produits aiguilletés finalement obtenus sont poussiéreux et de manipulation malaisée.

Dans EP-A-819 788, on propose de formuler l'ensimage avec une dispersion aqueuse d'au moins un polymère au moins partiellement halogéné, en particulier un ensimage fluoré à base d'un polyéther perfluoré répondant à la formule générale suivante :

CF₃-(O-CF(CF₃)-CF₂)ₙ-(O-CF₂)ₘ-O-CF₂-R

où R= -COO⁻NH₄⁺ ou -C(OH)₂-CF₃
et n et m sont des entiers avec n/m environ 20 à 40.

Ces composés perfluorés peuvent aisément être mis en dispersion dans une phase aqueuse et peuvent aussi être mis en émulsion en phase aqueuse à l'aide d'un alcool encombré stériquement tel que du t-butanol. Le t-butanol ayant une température d'ébullition de 80°C, il est instantanément volatilisé dans les conditions thermiques du procédé de fabrication d'un feutre aiguilleté et n'est donc source d'aucune pollution. Pour leur part, les composés perfluorés sont assez stables dans les conditions thermiques du procédé de fabrication.

Ces ensimages fluorés sont donc satisfaisants dans la mesure où ils causent moins de dégagement de formaldéhyde à partir d'un feutre de laine minérale chauffé à haute température telle que 250°C. Ils présentent cependant l'inconvénient d'être chers.

Le but de la présente invention est de pallier les inconvénients précités, et notamment de proposer un ensimage avec lequel les risques d'émissions nuisibles à l'environnement du produit sont réduits, en particulier les émissions de formaldéhyde ou autres.

A cet égard la présente invention a pour objet une composition d'ensimage pour feutre de laine minérale aiguilleté caractérisée en ce qu'elle comprend en dispersion aqueuse au moins un composé silicone constitué exclusivement d'un motif de répétition répondant à la formule (1)

(1) -SiRR'O-

dans laquelle
R désigne un atome d'hydrogène, un groupe alkyle ou aryle
R' désigne un atome d'hydrogène ou un groupe aryle

Par composé silicone, on entend un polymère de type polysiloxane se présentant sous forme d'une huile plus ou moins visqueuse. Ces polymères sont issus de la condensation d'un monomère siloxane, et présentant alors un seul motif de répétition.

Les familles de silicones répondant à la définition de l'invention ci-dessus sont :
- les dihydrogène silicones R = H et R' = H dans la formule (1)
- les alkylhydrogène silicones R = alkyle et R' = H dans la formule (1)
- les arylhydrogène silicones R = H et R' = aryle dans la formule (1)
- les alkylaryl silicones R = alkyle et R' = aryle dans la formule (1)
- les diaryl silicones R = aryle et R' = aryle dans la formule (1)

Parmi tous les silicones connus la sélection de silicones ci-dessus exclut les dialkyl silicones (ou poly(dialkylsiloxanes)) tels que le diméthyl silicone (ou poly(diméthylsiloxane)).

Il a en effet été observé par les présents inventeurs que les dialkyl silicones se décomposent à forte température de l'ordre de 350 °C avec émission de formaldéhyde.

Au contraire, les silicones sélectionnés ci-dessus, dans lesquels un atome de silicium ne peut porter qu'un seul groupement alkyle, en particulier méthyle, ont la particularité d'émettre de très faibles quantité de formaldéhyde lorsque des produits en renfermant sont chauffés à 350°C.

Dans la définition indiquée plus haut pour la formule (1), le terme alkyle désigne un groupement hydrocarboné saturé, linéaire ou ramifié, substitué ou non, pouvant renfermer de 1 à 20 atomes de carbone, notamment de 1 à 10 , en particulier de 1 à 5 atomes de carbone. On citera plus particulièrement les groupements méthyle, éthyle, i-propyle, n-propyle, n-butyle, s-butyle, t-butyle, n-pentyle, i-pentyle et les autres groupes alkyle ramifiés ayant 5 atomes de carbone ou moins.

Dans la définition indiquée plus haut pour la formule (1), le terme aryle désigne un groupement hydrocarboné insaturé mono- ou polycyclique, substitué ou non, pouvant renfermer de 6 à 15 atomes de carbone, notamment de 6 à 10 atomes de carbone. On citera plus particulièrement les groupements phényle, alkylphényle (ou alkyle a la signification donnée plus haut), aminophényle, alcoxyphényle (où alcoxy désigne un radical éther dérivé d'un groupe alkyle tel que défini ci-dessus) , naphtyle.

S'agissant des diaryl silicones, on utilise avantageusement un composé de formule (1) dans laquelle R = R' = aryle, notamment phényle.

Dans un mode de réalisation préféré, la composition comprend au moins un composé de type méthyl phényl silicone, c'est-à-dire un composé de formule (1) dans laquelle R = CH₃ et R' = C₆H₅.

Dans un autre mode de réalisation préféré, la composition comprend au moins un composé de type méthyl hydrogène silicone, c'est-à-dire un composé de formule (1) dans laquelle R = CH₃ et R' = H.

Les huiles silicones sélectionnées selon l'invention sont aisément dispersibles dans l'eau pour fournir une composition aqueuse qui peut notamment être pulvérisée. Dans un mode de réalisation particulier, l'huile silicone est mise en émulsion dans l'eau au moyen d'un tensioactif , qui peut être utilisé en des quantités très faibles.

Le tensioactif peut avantageusement être de type anionique notamment choisi dans la famille des mono- ou di-alkyl sulfonates, -sulfates ou -phosphates, alkylaryl sulfonates, -sulfates ou -phosphates et leurs combinaisons, où la chaîne hydrocarbonée du ou des groupes alkyle comprend avantageusement de l'ordre de 2 à 20 atomes de carbone, notamment de 2 à 10 atomes de carbone, et le groupe aryle peut avantageusement renfermer de 6 à 15 atomes de carbone, notamment 6 atomes de carbone par exemple du type alkylbenzène sulfonate.

La quantité de tensioactif utilisée est variable d'un tensioactif à l'autre et dépend aussi de l'huile silicone employée. Elle peut généralement être inférieure à environ 2% en poids par rapport au poids sec de silicone, en particulier inférieure à environ 1% en poids par rapport au poids sec de silicone.

L'invention a également pour objet un feutre aiguilleté à base de laine minérale, caractérisé en ce qu'il renferme au moins un composé choisi parmi les composés silicone constitué exclusivement d'un motif de répétition répondant à la formule (1)

(1) -SiRR'O-

dans laquelle
R désigne un atome d'hydrogène, un groupe alkyle ou aryle
R' désigne un atome d'hydrogène ou un groupe aryle

Le ou les composés silicone sont introduits dans le feutre aiguilleté au cours de sa fabrication, généralement par l'intermédiaire d'une composition aqueuse appliquée sur la laine minérale puis séchée. Au stade final de fabrication, le feutre aiguilleté renferme avantageusement une quantité de silicone inférieure ou égale à 1 %, notamment de l'ordre de 0,05 à 0,5 % en poids par rapport au poids de verre.

Le feutre aiguilleté selon l'invention présente une stabilité thermique améliorée par rapport aux produits courants, l'amélioration résidant dans une émission réduite de composés volatils nuisibles à l'environnement du produit y compris à haute température. Cette derniére propriété se révèle très intéressante notamment pour l'équipement de fours à pyrolyse, dont la temperature peut atteindre des valeurs de l'ordre de 500 à 550°C.

En particulier, le feutre aiguilleté selon l'invention se caractérise avantageusement en ce qu'il émet une quantité de formaldéhyde inférieure à environ 50 mg/kg de feutre, avantageusement inférieure à environ 40 mg/kg de feutre, lorsqu'il est porté à une température de 350°C pendant 1 heure.

L'invention a également pour objet un procédé de fabrication d'un feutre à base de laine minérale aiguilleté comprenant une étape d'obtention de laine à partir d'une composition minérale, une étape d'application d'un ensimage sur la laine, et une étape d'aiguilletage, caractérisé en ce que l'on applique sur la laine une composition d'ensimage telle que décrite précédemment.

D'autres caractéristiques et avantages de l'invention apparaîtront des exemples détaillés donnés ci-après à titre d'illustration non limitative.

### EXEMPLE 1

On évalue les qualités en tant que base d'ensimage d'une huile de type méthyl phényl silicone ( R = CH₃ et R' = C₆H₅ dans la formule (1) du motif de répétition), caractérisée par une viscosité à 25°C de l'ordre de 125 mPa.s, une densité à 25°C de 1,065 et un indice de réfraction à 25°C de 1,495.

L'huile pure est mise en émulsion dans de l'eau sous agitation.

Un échantillon de laine de verre fabriquée par la technique de l'éjection centrifuge est prélevé directement sous le dispositif de fibrage, puis traité à 550°C pour ôter toute trace de produit organique, puis est ensimé avec cette solution par trempage à raison de 1% en poids de matière sèche par rapport au poids de verre. L'échantillon est ensuite séché en étuve à 110°C pour éliminer l'eau.

On place cet échantillon pendant 1 heure dans un four tubulaire chauffant à 350°C, avec une circulation d'air dans le four à un débit de 150 l/h pour 10 g d'échantillon de laine minérale. En sortie du four, la quantité de formaldéhyde véhiculée par l'air chaud est dosée par colorimétrie (méthode acétylacétone).

La quantité de formaldéhyde émis ainsi mesurée est de 50 mg par kg de laine de verre.

### EXEMPLES 2 à 5

On soumet d'autres huiles de type méthyl phényl silicone, présentant des caractéristiques légèrement différentes, aux mêmes mesures que dans l'exemple 1.
- huile 2 : viscosité à 25 °C : 160-175 mPa.s
- huile 3 : viscosité à 25 °C : 35-42 mPa.s
- huile 4 : viscosité à 25 °C : 120-140 mPa.s
- huile 5 : viscosité à 25 °C : 90-110 mPa.s

Les résultats des mesures d'émissions de formaldéhyde sont rassemblés dans le Tableau 1 suivant.

### EXEMPLE 6

On soumet une huile de type méthyl hydrogène silicone (R = CH₃ et R' = H dans la formule (1) du motif de répétition) aux mêmes mesures que dans l'exemple 1. L'huile caractérisée par une viscosité à 25°C de l'ordre de 30 mPa.s est commercialisée sous le nom DC 1107 par Dow Corning.

Les résultats des mesures d'émissions de formaldéhyde sont rassemblés dans le Tableau 1 .

### EXEMPLES COMPARATIFS 1 à 4

On réalise les mêmes essais de mesure d'émission de formaldéhyde avec des échantillons préparés avec des huiles classiques :
- huile minérale de marque Mulrex commercialisée par Mobil
- huile minérale de marque Prorex commercialisée par Mobil
- diméthyl silicone (polydiméthyl siloxane) en émulsion à 60% de matière sèche, de viscosité 1000 mPa.s
- ester d'acide gras, de viscosité 200 mPa.s.

Les résultats des mesures d'émissions de formaldéhyde sont rassemblés dans le Tableau 1 .

**Tableau 1**

| | Type d'huile | Formaldéhyde émis mg/kg de laine |
|---|---|---|
| Exemple 1 | méthyl phényl silicone | 50 |
| Exemple 2 | méthyl phényl silicone | 17 |
| Exemple 3 | méthyl phényl silicone | 16 |
| Exemple 4 | méthyl phényl silicone | 27 |
| Exemple 5 | méthyl phényl silicone | 22 |
| Exemple 6 | méthyl hydrogène silicone | 30 |
| Exemple comparatif 1 | huile minérale | 378 |
| Exemple comparatif 2 | huile minérale | 407 |
| Exemple comparatif 3 | polydiméthyl siloxane | 281 |
| Exemple comparatif 4 | ester d'acide gras | 570 |

Il apparaît de ce tableau que les huiles des exemples 1 à 6 permettent de réduire les émissions de formaldéhyde d'un facteur supérieur à 10, et même supérieur à 30 dans certains cas selon la référence de comparaison.

Par rapport à l'huile de référence la plus proche des huiles selon l'invention, à savoir l'huile silicone de l'exemple comparatif 3, les huiles silicones utilisées selon l'invention voient leurs émissions de formaldéhyde à 350°C réduites au moins environ 6 fois.

### EXEMPLES D'APPLICATION

On fabrique un feutre aiguilleté dans des conditions industrielles avec un ensimage utilisant l'huile de l'exemple 1.

On prépare une composition d'ensimage en mettant l'huile en émulsion dans de l'eau par l'ajout d'un tensioactif de type dialkyl sulfonate. La composition de l'ensimage est la suivante:
- huile 100
- dialkyl sulfonate 1
- eau q.s. pour extrait sec 0,6%

La composition est appliquée sur de la laine de verre obtenue par la technique d'éjection centrifuge citée plus haut, par pulvérisation de la composition sur la laine en sortie du dispositif de fibrage avant réception de la laine sur un organe collecteur usuel et mise sous forme d'un feutre primitif imprégné qui est ensuite aiguilleté par les moyens habituels.

Le feutre aiguilleté est soumis à un test de chauffage à 350°C avec mesure d'émission de formaldéhyde comme dans l'exemple 1.

Les résultats de mesures sont présentés dans le Tableau 2 ci-après

Comme dans les exemples précédents, on compare les propriétes des produits selon l'invention avec un produit comparatif obtenu avec un ensimage à base d'ester d'acide gras selon l'exemple comparatif 4.

Le rapport d'émission entre le produit de l'exemple d'application 1 et le produit comparatif de référence est cette fois de 1 à 3,5, la différence provenant notamment de la modification des conditions générales du traitement (température de la fibre lorsqu'elle reçoit l'ensimage possibilités d'évaporation......). Néanmoins le niveau d'émission est remarquablement amélioré.

**Tableau 2**

| Base d'ensimage | Taux d'ensimage en % du poids de verre | Formaldéhyde émis mg/kg de feutre |
|---|---|---|
| Ex. 1 | 0,20 | 19-21 |
| Ex. 1 | 0,26 | 23-24 |
| Ex. 1 | 0,34 | 24-29 |
| Ex. comparatif 4 | 0,15-0,20 | 68-76 |

On compare le produit de l'exemple 1 avec celui obtenu avec l'ensimage de l'exemple comparatif 4, dans un autre test représentatif du fonctionnement d'un appareil de cuisson classique.

Le feutre est mis en place en tant qu'isolant dans une cuisinière installée dans une pièce fermée. L'atmosphère de la pièce est prélevée pendant 1 heure et la quantité de formaldéhyde naturellement ambiante est dosée.

La cuisinière est ensuite mise en route à thermostat 250°C. Une fois que la température de chauffe est stabilisée à 250°C, on commence de prélever l'atmosphère et on maintient la température à ce palier pendant 30 minutes. Puis on arrête la chauffe et l'on continue de prélever l'atmosphère pendant 30 minutes alors que la température de la cuisinière diminue.

On dose la quantité de formaldéhyde prélevée. En retranchant la valeur obtenue à blanc, on obtient la quantité de formaldéhyde émise en 1 heure par le feutre aiguilleté. Les résultats obtenus figurent en tableau 3 (exprimés en ppm de formaldéhyde dans l'air).

**Tableau 3**

| Base d'ensimage | Taux d'ensimage en % du poids de verre | Formaldéhyde émis en ppm |
|---|---|---|
| Ex. 1 | 0.26 | 0.12 |
| Exemple comparatif 4 | 0.15-0.20 | 1.44 |

Ce test montre que le feutre selon l'exemple 1 génère plus de 10 fois moins de formaldéhyde dans les conditions normales d'utilisation d'un appareil de cuisson.

## Revendications

1. Composition d'ensimage pour feutre à base de laine minérale aiguilleté **caractérisée en ce qu'**elle comprend en dispersion aqueuse au moins un composé silicone constitué exclusivement du motif de répétition répondant à la formule (1)
(1) -SiRR'O-
dans laquelle
R désigne un atome d'hydrogène, un groupe alkyle ou aryle
R' désigne un atome d'hydrogène ou un groupe aryle.

2. Composition selon la revendication 1, **caractérisée en ce qu'**elle comprend un composé silicone de type méthyl phényl silicone.

3. Composition selon la revendication 1 ou 2, **caractérisée en ce qu'**elle comprend un composé silicone de type méthyl hydrogène silicone.

4. Composition selon l'une des revendications précédentes, **caractérisée en ce qu**'elle comprend en outre un tensioactif choisi parmi les alkyl sulfonates, alkylaryl sulfonates, alkyl sulfates, alkylaryl sulfates, alkyl phosphates et alkylaryl phosphates.

5. Feutre aiguilleté à base de laine minérale, **caractérisé en ce qu**'il renferme au moins un composé silicone constitué exclusivement du motif de répétition répondant à la formule (1)
(1) -SiRR'O-
dans laquelle
R désigne un atome d'hydrogène, un groupe alkyle ou aryle
R' désigne un atome d'hydrogène ou un groupe aryle.

6. Feutre aiguilleté selon la revendication 5, **caractérisé en ce qu**'il renferme une quantité de silicone de l'ordre de 0,05 à 0,5 % en poids par rapport au poids de verre.

7. Feutre aiguilleté selon la revendication 5 ou 6, **caractérisé en ce qu**'il émet une quantité de formaldéhyde inférieure à environ 50 mg/kg de feutre lorsqu'il est porté à une température de 350°C pendant 1 heure.

8. Procédé de fabrication d'un feutre à base de laine minérale aiguilleté comprenant une étape d'obtention de laine à partir d'une composition minérale, une étape d'application d'un ensimage sur la laine, et une étape d'aiguilletage, **caractérisé en ce que** l'on applique sur la laine une composition d'ensimage selon l'une des revendications 1 à 4.

## Patentansprüche

1. Schlichtezusammensetzung für einen Filz auf der Basis von genadelter Mineralwolle, **dadurch gekennzeichnet, daß** sie in wäßriger Dispersion mindestens eine Siliconverbindung umfaßt, die ausschließlich aus der Repetiereinheit besteht, welche der Formel (1 )
(1) -SiRR'O-
entspricht,
wobei R ein Wasserstoffatom, eine Alkylgruppe oder eine Arylgruppe bezeichnet
R' ein Wasserstoffatom oder eine Arylgruppe bezeichnet.

2. Zusammensetzung nach Anspruch 1, **dadurch gekennzeichnet, daß** sie eine Siliconverbindung vom Typ Methylphenylsilicon umfaßt.

3. Zusammensetzung nach Anspruch 1 oder 2, **dadurch gekennzeichnet, daß** sie eine Siliconverbindung vom Typ Methylwasserstoffsilicon umfaßt.

4. Zusammensetzung nach einem der vorhergehenden Ansprüche, **dadurch gekennzeichnet, daß** sie des weiteren ein Tensid umfaßt, das unter Alkylsulfonaten, Alkylarylsulfonaten, Alkylsulfaten, Alkylarylsulfaten, Alkylphosphaten und Alkylarylphosphaten ausgewählt ist.

5. Nadelfilz auf Mineralwollebasis, **dadurch gekennzeichnet, daß** er mindestens eine Siliconverbindung umfaßt, die ausschließlich aus der Repetiereinheit besteht, welche der Formel (1)
(1) -SiRR'O-
entspricht,
wobei
R ein Wasserstoffatom, eine Alkylgruppe oder eine Arylgruppe bezeichnet
R' ein Wasserstoffatom oder eine Arylgruppe bezeichnet.

6. Nadelfilz nach Anspruch 5, **dadurch gekennzeichnet, daß** er eine Siliconmenge in der Größenordnung von 0,05 bis 0,5 Gew.-% bezogen auf das Gewicht von Glas umfaßt.

7. Nadelfilz nach Anspruch 5 oder 6, **dadurch gekennzeichnet, daß** er eine Formaldehydmenge von weniger als ca. 50 mg/kg Filz freisetzt, wenn er für 1 h auf eine Temperatur von 350°C gebracht wird.

8. Verfahren zur Herstellung eines Filzes auf der Basis von genadelter Mineralwolle, mit einem Schritt zur Herstellung von Wolle aus einer mineralischen Zusammensetzung, einem Schritt des Aufbringens einer Schlichte auf die Wolle, und einem Nadelschritt, **dadurch gekennzeichnet, daß** eine Schlichtezusammensetzung nach einem der Ansprüche 1 bis 4 auf die Wolle aufgebracht wird.

## Claims

1. Sizing composition for needled felt based on mineral wool, **characterised in that** it comprises, in aqueous dispersion, at least one silicon compound composed solely of the repeating unit corresponding to formula (1)
(1) -SiRR'O-
in which R denotes a hydrogen atom, an alkyl group or an aryl group,
R' denotes a hydrogen atom or an aryl group.

2. Composition according to claim 1, **characterised in that** it comprises a silicon compound of the methyl phenyl silicon type.

3. Composition according to claim 1 or 2, **characterised in that** it comprises a silicon compound of the methyl hydrogen silicon type.

4. Composition according to any one of the preceding claims, **characterised in that** it further comprises a surfactant selected from the alkyl sulfonates, alkylaryl sulfonates, alkyl sulfates, alkylaryl sulfates, alkyl phosphates and alkylaryl phosphates.

5. Needled felt based on mineral wool, **characterised in that** it comprises at least one silicon compound composed solely of the repeating unit corresponding to formula (1)
(1) -SiRR'O-
in which R denotes a hydrogen atom, an alkyl group or an aryl group,
R' denotes a hydrogen atom or an aryl group.

6. Needled felt according to claim 5, **characterised in that** it comprises an amount of silicon of the order of from 0.05 to 0.5 % by weight, based on the weight of glass.

7. Needled felt according to claim 5 or 6, **characterised in that** it emits a quantity of formaldehyde of less than about 50 mg/kg of felt when it is heated to a temperature of 350°C for one hour.

8. Process for the production of a needled felt based on mineral wool, comprising a step of obtaining wool from a mineral composition, a step of applying a size to the wool, and a needling step, **characterised in that** a sizing composition according to any one of claims 1 to 4 is applied to the wool.
